(19) Europäisches Patentamt
European Patent Office
Office européen des brevets

(11) **EP 2 435 856 B1**

(12) **FASCICULE DE BREVET EUROPEEN**

(45) Date de publication et mention
de la délivrance du brevet:
**21.10.2015 Bulletin 2015/43**

(21) Numéro de dépôt: **10728826.8**

(22) Date de dépôt: **27.05.2010**

(51) Int Cl.:
***G01V 1/20*** *(2006.01)*      ***G01H 9/00*** *(2006.01)*

(86) Numéro de dépôt international:
**PCT/FR2010/051017**

(87) Numéro de publication internationale:
**WO 2010/136724 (02.12.2010 Gazette 2010/48)**

(54) **HYDROPHONE A FIBRE A RESEAU DE BRAGG AVEC AMPLIFICATEUR A SOUFFLET**

FASER-BRAGG-GITTER-HYDROPHON MIT EINEM BALGVERSTÄRKER

BRAGG GRATING FIBER HYDROPHONE WITH A BELLOWS AMPLIFIER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **29.05.2009 FR 0953581**

(43) Date de publication de la demande:
**04.04.2012 Bulletin 2012/14**

(73) Titulaire: **IXBLUE**
**78160 Marly le Rol (FR)**

(72) Inventeurs:
• **GROSSO, Gilles**
**F-83140 Six Fours les Plages (FR)**
• **MOSCA, Frédéric**
**F-13005 Marseille (FR)**

(74) Mandataire: **Chauvin, Vincent et al**
**Cabinet Harle et Phelip**
**14/16 rue Ballu**
**75009 Paris (FR)**

(56) Documents cités:
**EP-A- 1 310 801        GB-A- 2 145 237**
**US-A- 6 160 762        US-A1- 2004 237 648**
**US-B1- 6 175 108**

• **BERKOFF T.A., KERSEY A.D.: "EXPERIMENTAL DEMONSTRATION OF A FIBER BRAGG GRATING ACCELEROMETER" IEEE PHOTONICS TECHNOLOGY LETTERS, IEEE SERVICE CENTER, PISCATAWAY, NJ, US, vol. 8, no. 12, décembre 1996 (1996-12), pages 1677-1679, XP000679546 ISSN: 1041-1135**

**Description**

L'invention se rapporte au domaine de la mesure de pression acoustique, notamment en milieu sous-marin.

Les capteurs acoustiques tels les hydrophones sont classiquement utilisés en milieu sous-marin pour détecter des variations de pression acoustique qui peuvent être provoquées par des ondes sismiques, la présence de mammifères marins ou de navires, par exemple.

Ils peuvent être utilisés en statique et déployé sur le fond sous-marin pour réaliser une surveillance acoustique, ou être tractés par un navire ou un sous-marin.

La majorité des capteurs acoustiques connus est basée sur l'utilisation de composants piézoélectriques dont la déformation entraîne une variation de pression qui peut être mesurée électroniquement.

Cependant, ces capteurs nécessitent une installation locale, les rendant difficilement utilisables pour les applications remorquées, comme capteur sismique par exemple. De plus, les composants piézoélectriques sont sensibles aux perturbations électromagnétiques.

Pour remédier à ces inconvénients, il existe des hydrophones à fibre optique de type DFB FL (« Distributed Feedback Fibre Laser ») comprenant un réseau de Bragg, et qui ont pour propriétés d'émettre des longueurs d'onde très fines sensibles à la contrainte mécanique appliquée sur la fibre optique. La mesure de ses variations de longueurs d'onde émises permet de déduire la contrainte appliquée sur la fibre optique et donc la pression externe. Un tel système est décrit dans le document US-A-6 160 762.

Ce type de capteur acoustique présente des avantages tels que l'absence de composants électroniques dans la partie immergée, les rendant plus facilement remorquables, et la possibilité de multiplexer sur une même fibre plusieurs capteurs.

Cependant, ces capteurs à fibre optique présentent une sensibilité insuffisante pour la détection des faibles variations de pression.

Pour amplifier ces faibles variations de pression, il est connu d'amplifier mécaniquement la contrainte mécanique appliquée sur la fibre optique.

Des capteurs à fibre optique comprennent une fibre optique entourée d'un cylindre de résine élastomère de façon à augmenter les contraintes au niveau de la fibre optique par applications de contraintes de cisaillement sur la fibre optique générée par le cylindre élastique.

Cependant, cette technologie ne permet pas d'atteindre les sensibilités requises pour la détection de petites variations de pression acoustique. De plus, le réseau de Bragg étant encapsulé par la résine, son fonctionnement est modifié et sa fréquence laser diminue.

Le document WO 2006/034538 divulgue une fibre optique fixée à un support flexible. Ce dernier permet d'amplifier les signaux acoustiques.

Il existe également des capteurs acoustiques du type "tube de dentifrice" ayant une fibre optique munie d'un réseau de Bragg entouré par une enveloppe déformable remplie d'un fluide incompressible. La fibre laser est solidaire des extrémités de l'enveloppe déformable.

Les inconvénients de ces hydrophones de l'art antérieur sont qu'ils fournissent des sensibilités trop faibles, et qu'ils sont trop encombrants.

Lorsqu'ils sont utilisés en tant que flûtes tractées par un navire ou un sous-marin, et que l'opération de surveillance acoustique est terminée, la fibre optique est enroulée avec le ou les hydrophones autour d'un tambour de treuil qui est solidaire du navire ou du sous-marin.

Les hydrophones de l'art antérieur ayant des dimensions élevées, ces derniers nécessitent l'utilisation de tambours de grand diamètre, et empêchent l'obtention d'un enroulement de fibre optique homogène.

Le demandeur s'est donc attaché à la mise au point d'un hydrophone à fibre à réseau de Bragg ayant une sensibilité améliorée et moins encombrant par rapport aux hydrophones connus.

Un tel dispositif est fourni selon l'invention.

L'invention concerne un hydrophone à fibre à réseau de Bragg comprenant une cavité fluide, et une fibre optique dans laquelle est intégrée un réseau de Bragg, ladite fibre optique traversant ladite cavité fluide selon un axe longitudinal (X) et de manière à ce que ledit réseau de Bragg soit positionné à l'intérieur de celle-ci.

L'invention est défini dans la revendication 1.

L'invention fournit ainsi un hydrophone à fibre à réseau de Bragg ayant une sensibilité améliorée par rapport aux hydrophones connus, permettant d'atteindre des gains supérieurs à 500.

L'invention fournit également un hydrophone de faible diamètre (inférieur à 10 mm), et flexible, ayant un encombrement limité, ce qui lui permet d'être enroulé autour d'un tambour de treuil de faible diamètre lors de son utilisation comme flûte tractée.

En effet, la flexibilité axiale des tubes extensibles et compressibles ou soufflets permet une légère flexion de l'hydrophone sur sa longueur.

De plus, le fait que les parties formées par un tube extensibles et compressibles soient déformables dans le même sens, rend l'hydrophone insensible au bruit accélérométrique lorsqu'il est tracté par un navire ou un sous marin.

Dans différents modes de réalisation possibles, le dispositif de l'invention peut être défini également par les caractéristiques suivantes qui pourront être considérées isolément ou selon toutes leurs combinaisons techniquement possibles et qui apportent chacune des avantages spécifiques :

- ladite enveloppe comprend deux parties formées par un tube extensible et compressible, et une partie intermédiaire séparant lesdites parties formées par un tube extensible et compressible, chacune des extrémités externes des parties formées par un tube extensible et compressible coïncidant avec l'une des deux extrémités respectives de l'enveloppe,
- la partie intermédiaire de l'enveloppe est rigide,
- la partie intermédiaire de l'enveloppe comprend une cloison positionnée en son milieu, et traversée par la fibre optique,
- la fibre optique est solidaire de ladite cloison par un point d'appui.

Ce point d'appui forme un point nodal et permet de décaler la bande de fréquence utile vers les hautes fréquences. Il permet aussi de favoriser la tenue mécanique de l'hydrophone lorsqu'il est utilisé dans une flûte.

- ladite fibre optique est une fibre optique précontrainte, ladite fibre optique étant maintenue sous tension entre les deux extrémités de l'enveloppe,
- l'hydrophone à fibre à réseau de Bragg comprend au moins un filtre hydrostatique coopérant avec la cavité fluide, chaque filtre hydrostatique étant muni d'un orifice apte à permettre une communication fluidique entre l'intérieur et l'extérieur de la cavité fluide,
- chaque filtre hydrostatique comprend un réservoir délimité par une enveloppe externe déformable et par la paroi externe d'un des tubes extensibles et compressibles, ledit réservoir étant en communication fluidique avec la cavité fluide par l'intermédiaire dudit orifice, ladite enveloppe externe déformable étant fixée à l'enveloppe de façon hermétique.

Le filtre hydrostatique permet de compenser l'hydrophone en pression lors de variation de pression statique (immersion) ou de température. Lors d'une variation lente de pression ou de température, un écoulement s'établit entre la cavité fluide et le réservoir, visant à équilibrer les pressions intérieure et extérieure. Les très basses fréquences sont ainsi filtrées. La dimension de l'orifice du filtre hydrostatique détermine la fréquence de coupure basse et donc détermine la limite basse de la bande d'utilisation de l'hydrophone.

L'hydrophone est utilisable dans une gamme de fréquence acoustique large, entre 0,4 Hz et 10 kHz.

Lorsque l'hydrophone est immergé en milieu sous marin, et utilisé en statique, les filtres hydrostatiques permettent d'atténuer l'effet des vagues et de la houle.

- l'hydrophone à fibre à réseau de Bragg comprend une enveloppe externe, souple et hermétique, entourant l'ensemble formé par l'enveloppe et les filtres hydrostatiques, ladite enveloppe externe étant remplie d'un fluide de façon à transmettre les variations de pression extérieures à ladite cavité fluide,
- le fluide compressible de la cavité fluide présente un module de compressibilité inférieur à 1,5 GPa, de préférence inférieur à 0,5 GPa.

L'invention sera décrite plus en détail en référence aux dessins annexés dans lesquels :

- la figure 1 représente une coupe longitudinale d'un hydrophone à fibre à réseau de Bragg, selon un premier mode de réalisation de l'invention,
- la figure 2 représente une coupe longitudinale d'un hydrophone à fibre à réseau de Bragg, selon un deuxième mode de réalisation de l'invention,
- la figure 3 représente une coupe longitudinale d'un hydrophone avec des filtres hydrostatiques,
- les figures 4 et 5 représentent des exemples de tubes extensibles et compressibles possibles, l'un ayant des anneaux de section carrée et l'autre ayant des anneaux de section triangulaire.

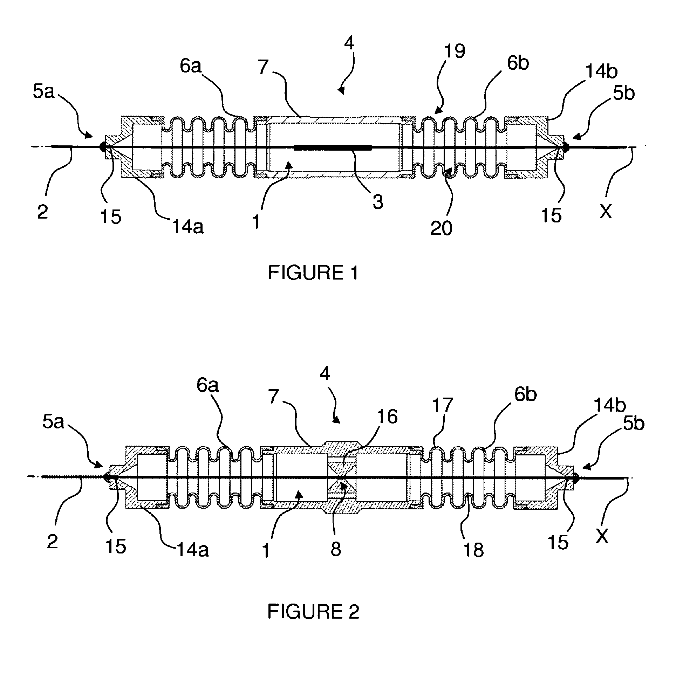

La figure 1 représente une coupe longitudinale d'un hydrophone à fibre à réseau de Bragg, selon un premier mode de réalisation de l'invention.

L'hydrophone à fibre à réseau de Bragg comprend une cavité fluide 1 remplie d'un fluide compressible et délimitée par une enveloppe 4 comportant deux extrémités 5a, 5b.

L'hydrophone à fibre à réseau de Bragg comprend également une fibre optique 2 dans laquelle est intégrée un réseau de Bragg 3, formant une cavité laser. Le réseau de Bragg 3 peut être photoinscrit dans la fibre optique 2.

La fibre optique 2 traverse la cavité fluide 1 selon un axe longitudinal (X) de manière à ce que le réseau de Bragg 3 soit positionné à l'intérieur de celle-ci. Les deux extrémités 5a, 5b de l'enveloppe 4 sont solidaires de la fibre optique 2.

L'enveloppe 4 comprend au moins une partie formée par un tube extensible et compressible 6a, 6b s'étendant selon l'axe longitudinal (X). La partie formée par le tube extensible et compressible 6a, 6b comprend une extrémité externe coïncidant avec l'une des deux extrémités de l'enveloppe 5a, 5b. Le tube extensible et compressible 6a, 6b forme un soufflet flexible qui peut être plié ou déplié selon l'axe longitudinal (X).

Dans les exemples des figures 1 à 3, l'enveloppe 4 comprend deux parties formées par un tube extensible et compressible 6a, 6b, et une partie intermédiaire 7 séparant les parties formées par un tube extensible et compressible 6a, 6b. Ces parties 6a, 6b, 7 sont assemblées de façon étanche.

Chacune des extrémités externes des parties formées par un tube extensible et compressible 6a, 6b coïncide avec l'une des deux extrémités 5a, 5b respectives de l'enveloppe 4.

L'extrémité interne de chaque tube extensible et compressible 6a, 6b est fixée de façon étanche à l'une des extrémités de la partie intermédiaire 7.

L'extrémité externe de chaque tube extensible et compressible 6a, 6b forme une des extrémités de l'enveloppe 5a, 5b.

L'ensemble formé par les tubes extensibles et compressibles 6a, 6b, et la partie intermédiaire 7 est de préférence symétrique.

Les deux tubes extensibles et compressibles 6a, 6b sont identiques. Le réseau de Bragg 3 est positionné au centre de l'enveloppe 4, c'est-à-dire au centre de la partie intermédiaire 7.

Les tubes extensibles et compressibles 6a, 6b comprennent une succession d'anneaux (ou spires) externes 17 de diamètre d1, reliées entre eux par des anneaux (ou spires) internes 18 de diamètre d2, inférieur à d1, formant des créneaux.

Sur les figures 1 à 3, ces anneaux externes et internes 17, 18 ont une surface arrondie. Chaque tubes extensibles et compressibles 6a, 6b comprend quatre anneaux externes 17, et cinq anneaux internes 18. Le gain obtenu est fonction du nombre d'anneaux externes et internes 17, 18. Plus, il y a d'anneaux, et plus le gain est grand.

La forme, le profil et l'épaisseur des tubes extensibles et compressibles 6a, 6b ou soufflets influencent la flexibilité mécanique et la déformation axiale de ces derniers..

D'autres formes de tubes extensibles et compressibles 6a, 6b sont possibles.

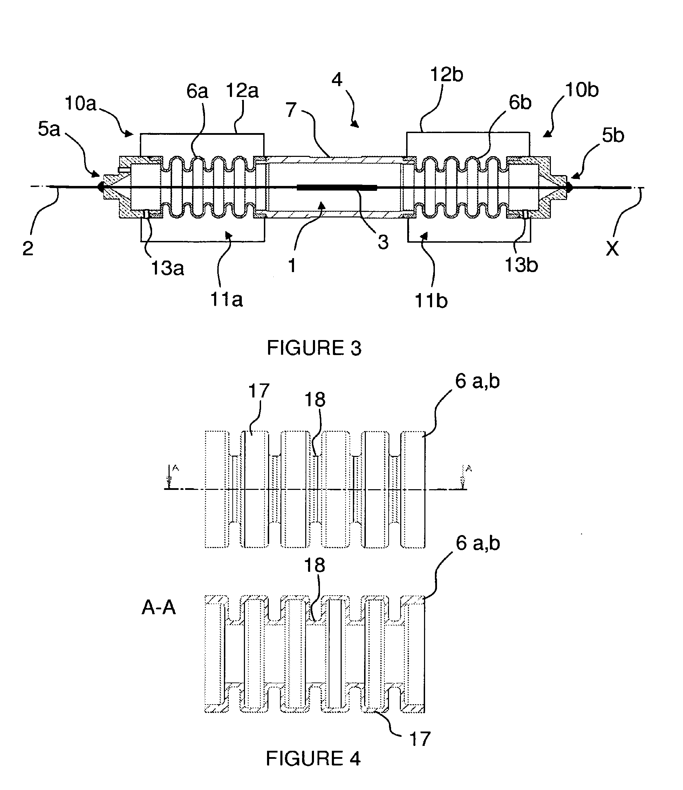

La figure 4 représente un tube extensible et compressible 6a, 6b comprenant des anneaux externes 17 et internes 18 avec des sections carrées.

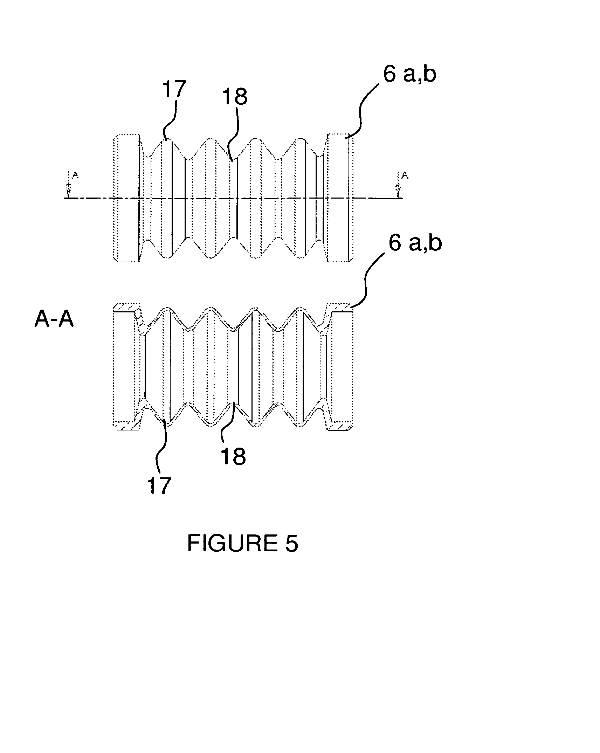

La figure 5 représente un tube extensible et compressible 6a, 6b comprenant des anneaux externes 17 et internes 18 avec des sections triangulaires.

Le profil des tubes extensibles et compressibles 6a, 6b doit permettre d'obtenir le maximum de déplacement axial pour un minimum de déplacement radial, et le maximum de déplacement axial pour un minimum de variation de volume du fluide, et ceci quelle que soit l'élasticité et la compressibilité du fluide.

Le déplacement axial doit être maximal pour les anneaux internes 18, ce qui entraîne une variation de volume minimale.

Les parois planes doivent être le plus perpendiculaire possible par rapport à l'axe longitudinal (X), afin de réduire la raideur des tubes extensibles et compressibles 6a, 6b. La surface de ces parois planes doit être la plus grande possible.

Les anneaux externes 17 doivent être le plus résistant possible face aux forces radiales afin de limiter la compression radiale des tubes extensibles et compressibles 6a, 6b et donc limiter la variation du volume du fluide.

Les créneaux des tubes extensibles et compressibles 6a, 6b doivent être asymétriques suivant l'axe longitudinal (X). Les anneaux internes 18 doivent être plus large que les anneaux externes 17, afin d'augmenter au maximum le volume interne de la cavité fluide 1.

Les tubes extensibles et compressibles 6a, 6b peuvent également comprendre un anneau externe 17 et un anneau interne 18 en forme de spirale ou hélicoïdal.

Dans cet exemple, la fibre optique 2 présente une sensibilité comprise entre 3 à 4,5 nm / MPa, un diamètre de 125 $\mu$m, et un module d'Young compris entre 50 GPa et 90 GPa, de préférence égal à 70 GPa.

Les deux extrémités 5a, 5b de l'enveloppe 4 sont traversées par la fibre optique 2, et sont solidaires de celle-ci. Elles peuvent être fixées à la fibre optique 2 par soudure ou collage, par exemple. La soudure peut être une soudure laser avec ou sans férule. Le collage peut être un collage par coating polyamide ou par colle Epoxy.

Les parties formées par un tube extensible et compressible 6a, 6b sont chacune aptes à être déformées longitudinalement, c'est-à-dire à avoir leur longueur qui varie, par une différence des pressions exercées sur leurs parois, entraînant une variation de la longueur de la fibre optique 2 mesurée par une variation de longueur d'onde d'un flux lumineux extrait de la fibre optique 2. Plus précisément, c'est la variation de la longueur de la cavité laser qui est mesurée.

Chaque tube extensible et compressible 6a, 6b forme un amplificateur mécanique, amplifiant la déformation de la fibre optique 2.

La relation entre les variations de longueurs d'onde et de pression s'exprime de la manière suivante :

$$\Delta\lambda = S_{opt} G_{méca} \Delta P$$

Avec ΔP, la pression appliquée sur la structure, $S_{opt}$, la sensibilité du réseau de Bragg "nu" et $G_{méca}$, le gain mécanique recherché.

Le pompage optique de la fibre optique 2 peut être effectué par une diode laser à 980 nm, par exemple. Le flux lumineux extrait de la fibre optique 2 présente une longueur d'onde qui est fonction de l'allongement ou du rétrécissement de la fibre optique 2. Les variations de longueur d'onde sont mesurées par un interféromètre de Mach Zehnder, par exemple.

Les tubes extensibles et compressibles 6a, 6b sont déformables principalement selon l'axe longitudinal (X) et sont très faiblement déformables radialement.

Lorsque la pression extérieure Pe est supérieure à la pression intérieure Pi, les tubes extensibles et compressibles 6a, 6b se compriment, réduisant le volume de la cavité fluide 1, et entraînant un rétrécissement de la fibre optique 2 (ou de la cavité laser).

La pression extérieure Pe est exercée sur la paroi externe 19 des tubes extensibles et compressibles 6a, 6b, tandis que la pression intérieure Pi est exercée sur la paroi interne 20 des tubes extensibles et compressibles 6a, 6b.

Et vice-versa, lorsque la pression extérieure Pe est inférieure à la pression intérieure Pi, les tubes extensibles et compressibles 6a, 6b s'allongent, entraînant un allongement de la fibre optique 2.

La longueur de l'hydrophone est inférieure aux longueurs d'onde acoustiques mesurées. Le champ de pression est supposé homogène.

Par conséquent, en statique, les tubes extensibles et compressibles 6a, 6b se compriment ou se détendent simultanément.

Les tubes extensibles et compressibles 6a, 6b peuvent être en métal, ou en polymère, par exemple.

La partie intermédiaire 7 de l'enveloppe 4 peut être rigide ou flexible. Dans le cas d'une enveloppe rigide 4, elle peut être en titane, par exemple.

Le fluide compressible de la cavité fluide 1 présente un module de compressibilité inférieur à 1,5 GPa, de préférence inférieur à 1,5 GPa.

Le fluide compressible peut être à base de fluorocarbone, comme par exemple de perfluorohexane ($C_6F_{14}$) qui a un module de compressibilité de 1 GPa.

Dans les exemples des figures 1 à 3, le fluide utilisé est du fluor inerte fourni par la société 3M.

Les deux tubes extensibles et compressibles 6a, 6b peuvent se terminer à chacune de leur extrémité externe, c'est-à-dire aux extrémités 5a, 5b de l'enveloppe 4, par deux embouts 14a, 14b respectifs. Ces embouts 14a, 14b sont rigides et solidaires de la fibre optique 2.

Dans les exemples des figures 1 à 3, les deux tubes extensibles et compressibles 6a, 6b ont des sections circulaires, et la partie intermédiaire 7 ou centrale est en forme de tube avec une section circulaire. Les deux embouts 14a, 14b ont une forme cylindrique. L'hydrophone présente une forme générale tubulaire.

Selon un procédé de montage possible de l'hydrophone, les deux tubes extensibles et compressibles 6a, 6b sont emboîtés de façon étanche de part et d'autre de la partie intermédiaire 7.

Les deux embouts 14a, 14b sont ensuite emboîtés de façon étanche à chaque extrémité externe des tubes extensibles et compressibles 6a, 6b.

La fibre optique 2 est ensuite enfilée dans les deux embouts 14a, 14b de façon à traverser l'enveloppe 4 suivant l'axe principal (X).

Dans cet exemple où l'enveloppe 4 est en forme de tube, l'axe principal (X) est un axe longitudinal central. La fibre optique 2 passe par le centre de l'enveloppe 4.

Le principe de fonctionnement de l'hydrophone à fibre à réseau de Bragg ou laser est basé sur l'allongement d'une cavité laser (réseau de Bragg 3).

La géométrie du réseau de Bragg 3 et l'indice du milieu déterminent la fréquence de résonance de la cavité laser, donc sa longueur d'onde. La pression radiale exercée sur la cavité laser en modifie la géométrie et induit des contraintes dans la silice de la fibre. L'allongement et le niveau de contrainte dans la cavité laser modifient respectivement la géométrie et l'indice du milieu. Ces modifications induisent une variation de la fréquence de résonance, donc de la longueur d'onde du laser. L'hydrophone à fibre optique utilise cette propriété pour détecter les ondes acoustiques.

La sensibilité de l'hydrophone est caractérise par le rapport $\frac{\varepsilon_x}{P_e}$ où $\varepsilon_x$ est l'allongement axial de la fibre optique

(cavité laser) et $P_e$ la pression extérieure. Dans le cas de la fibre seule, la sensibilité théorique est

$$\frac{\varepsilon_x}{P_e} = 2\frac{v}{E} = 4.7 * 10^{-12}$$ avec E et v respectivement le module de Young et le coefficient de poisson de la silice.

Les tubes extensibles et compressibles 6a, 6b, le fluide compressible et l'enveloppe 4 forment un amplificateur mécanique permettant d'accroître cette sensibilité à la pression extérieure $P_e$.

Cet amplificateur permet d'amplifier les déformations axiales tandis que les déformations radiales restent très faibles.

Lors du fonctionnement de l'hydrophone, une onde acoustique basse fréquence entraîne une variation locale de la pression autour de l'hydrophone.

La pression extérieure (Pe) devient donc différente de la pression (Pi) régnant au sein de la cavité fluide 1.

La cavité fluide 1 via sa compressibilité tend à équilibrer sa pression avec la pression extérieure par une variation de son volume :

$$-\frac{1}{\chi_s}\frac{dV}{V} = (Pe - Pi)$$

Avec $\chi_s$, la compressibilité adiabatique du fluide. V, le volume de cavité fluide 1 et dV, la variation de volume de la cavité.

La géométrie de l'hydrophone contraint la fibre optique 2 à se déformer axialement.

Localement, sur un des tubes extensibles et compressibles 6a, 6b, la variation de volume prend la forme :

$$dV = dx * S_{ax} + (\pi R^2 - \pi(R + dr)^2)l$$

Avec Sax, la surface orthogonale à l'axe du tube extensible et compressible 6a, 6b, R le rayon extérieur du tube extensible et compressible 6a, 6b et l sa longueur.

Or:

$$dx = \frac{P * S_{ax}}{k_{ax}} \text{ et } dr = \frac{P * S_r}{k_{rad}}$$

Avec $k_{ax}$ et $k_{rad}$, les raideurs axiales et radiales du fluide, $S_r$ la surface radiale du tube extensible et compressible 6a, 6b et P la pression incidente.

Les tubes extensibles et compressibles 6a, 6b orientent axialement les déformations par : $k_{ax} << k_{rad}$.

Le gain peut s'exprimer comme le rapport entre la déformation axiale de la fibre optique due à l'amplificateur mécanique, et la déformation axiale de cette fibre due à la pression sur celle-ci nue.

Le mode de réalisation qui suit donne un exemple de dimensions possibles pour l'hydrophone.

La partie intermédiaire 7 peut avoir un diamètre externe de 10 mm.

Les tubes extensibles et compressibles 6a, 6b peuvent avoir des anneaux externes ayant un diamètre externe de 10 mm, par exemple.

De manière générale, les anneaux externes des tubes extensibles et compressibles 6a, 6b, et la partie intermédiaire 7 peuvent avoir un diamètre externe inférieur à 10 mm.

La fibre optique peut avoir un diamètre de 125 $\mu$m, et le réseau de Bragg 3 peut s'étendre sur une longueur de 50 mm. Le module de compressibilité du fluide compressible peut être de 1 GPa. Ces paramètres permettent d'atteindre un gain de 800.

D'autres dimensions sont également possibles, entraînant des gains différents.

De manière générale, l'hydrophone selon l'invention permet d'atteindre des gains supérieurs à 500.

La fibre optique 2 est une fibre optique précontrainte.

Selon un mode de réalisation possible, cette précontrainte est exercée par les deux extrémités 5a, 5b de l'enveloppe 4 (ou des tubes extensibles et compressibles 6a, 6b).

Une fois l'amplificateur mécanique monté, la fibre optique 2 est enfilée dans des orifices 15 prévus dans les embouts 14a, 14b des tubes extensibles et compressibles 6a, 6b de façon à ce que le réseau de Bragg 3 soit placé au centre de la cavité fluide 1.

La fibre optique 2 est ensuite fixée à l'extrémité d'un des embouts 14a, 14b par soudure ou collage.

Une fois la fibre optique 2 fixée d'un coté, on applique de l'autre coté une précontrainte calibrée en tirant sur la fibre optique 2.

La fibre optique 2 étant tendue, elle est soudée ou collée à l'extrémité de l'autre embout 14a, 14b par soudure ou collage.

La fibre optique 2 est ainsi tendue entre les deux extrémités 5a, 5b de l'enveloppe 4.

De cette façon on obtient un équilibre parfait de la tension de la fibre optique 2 de chaque côté des extrémités 5a, 5b de l'enveloppe 4.

La fibre optique 2 est ensuite coupée, puis raboutée de part et d'autre avec de la fibre optique gainée.

Cette précontrainte permet d'éviter à la fibre optique 2 de se replier sur elle-même lors d'une forte pression acoustique.

La précontraine appliquée sur la fibre optique 2 est calculée pour être supérieure aux déformations maximales que pourra subir le dispositif. Ainsi la fibre optique 2 sera toujours tendue pendant le fonctionnement de l'hydrophone.

La pré-contrainte maximale applicable sur la fibre est de 2N. Ce qui correspond à une contrainte maximale de:

$$\sigma = \frac{F}{s_{fibre}} = 1.63.10^8\, Pa$$ , pour une fibre optique 2 de diamètre 125 $\mu$m.

Le module de Young de la fibre optique 2 étant de 70 GPa, la déformation maximale de fonctionnement en dilatation de la fibre optique 2 est donc de $\varepsilon_{pc} = \frac{\sigma}{E} = 2.3.10^{-3}$. La pression acoustique maximale de fonctionnement de l'hydrophone est donc de : $P_{\max} = \frac{\varepsilon_{pc}}{\varepsilon_{1Pa}} = \frac{\varepsilon_{pc}}{G.\varepsilon_{ref}} = \frac{2.3.10^{-3}}{4.72.10^{-9}} = 4.87 bar$.

Soit un niveau acoustique de fonctionnement maximal de :

$$S_{\max} = 20\log_{10}\left(\frac{P_{\max}}{P_{ref}}\right) = 20\log_{10}\left(\frac{4.87.10^5}{1.10^{-6}}\right) = 234 dB$$

Selon un mode de réalisation possible (non illustré), la tension de la fibre optique 2 est maintenue par des moyens de maintien disposés de part et d'autre de la cavité fluide 1, et en appui sur la partie intermédiaire 7.

Selon un mode de réalisation, l'hydrophone à fibre à réseau de Bragg comprend au moins un filtre hydrostatique 10a, 10b associé à un tube extensible et compressible 6a, 6b respectif de l'enveloppe 4.

Comme illustré par le mode de réalisation de la figure 3, l'hydrophone comprend deux filtres hydrostatiques 10a, 10b disposés de part et d'autre de la partie intermédiaire 7.

Chaque filtre hydrostatique 10a, 10b a un réservoir 11 a, 11 b délimité par une enveloppe externe déformable 12a, 12b et par un des tubes extensibles et compressibles 6a, 6b.

Le réservoir 11a, 11 b est en communication fluidique avec la cavité fluide 1 par l'intermédiaire d'un orifice 13a, 13b traversant chaque embout 14a, 14b. L'enveloppe externe déformable 12a, 12b entoure un des tubes extensibles et compressibles 6a, 6b de façon hermétique.

L'enveloppe externe déformable 12a, 12b du filtre hydrostatique 10a, 10b a une forme cylindrique et peut être en polymère, par exemple.

Les réservoirs 11 a, 11 b et la cavité fluide 1 sont remplis du même fluide compressible.

Chaque enveloppe externe déformable 12a, 12b transmet les variations de pression à un des tubes extensibles et compressibles 6a, 6b par l'intermédiaire du fluide compressible.

Les orifices 13a, 13b des filtres hydrostatiques 10a, 10b ont un diamètre compris entre 100 $\mu$m et 20 $\mu$m, de préférence égal à 50 $\mu$m.

Les filtres hydrostatiques 10a, 10b permettent de mettre le fluide interne à la pression hydrostatique après une variation lente de pression suite à un changement de température ou d'immersion. Ainsi il est possible de s'affranchir de la pression hydrostatique et de ne tenir compte que des variations de pression autour de cette pression. Il est à noter que ces filtres hydrostatiques représentent une limite pour la détection des très basses fréquences. En effet, le temps de réaction du filtre hydrostatique déterminera la fréquence la plus basse mesurable par l'hydrophone. Les filtres hydrostatiques sont des filtres passe-hauts. Ainsi si la fréquence de l'onde acoustique est inférieure à la fréquence de coupure du filtre hydrostatique, il sera sans effet sur cette onde acoustique.

Les très basses fréquences sont filtrées par ce procédé. La dimension du trou des filtres hydrostatiques détermine la fréquence de coupure basse et donc détermine la limite basse de la bande d'utilisation de l'hydrophone. Plus le diamètre de l'orifice 13a, 13b est petit, et plus la fréquence de coupure est basse.

La fréquence de coupure est inférieure à 10 Hz, de préférence égale à 0,4 Hz.

L'hydrophone permet de détecter des ondes acoustiques dans la bande de fréquence comprise entre 0,4 Hz et 10 kHz.

Les éléments constituant l'hydrophone, comme par exemple les tubes extensibles et compressibles 6a, 6b et la fibre optique 2, présentent une fréquence de résonance en dehors de la gamme de fréquence allant de 0,4 Hz à 10 kHz.

Les orifices 13a, 13b des filtres hydrostatiques 10a, 10b permettent un équilibrage en pression entre l'intérieur de l'enveloppe 4 et l'intérieur des réservoirs 11 a, 11 b des filtres hydrostatiques 10a, 10b, et une compensation en température, rendant l'hydrophone insensible aux variations lentes de pression et de température lors des immersions de l'hydrophone à des profondeurs variables.

Lorsque l'hydrophone est immergé en milieu sous marin, et utilisé en statique, les filtres hydrostatiques 10a, 10b permettent d'atténuer l'effet des vagues et de la houle.

Selon un mode de réalisation possible illustré sur la figure 2, la partie intermédiaire de l'enveloppe 7 comprend une cloison 16 positionnée en son milieu. Cette cloison 16 peut être étanche ou pas.

Cette cloison 16 permet de limiter l'effet de la partie intermédiaire de l'enveloppe 7 en la raidissant radialement. Dans ce cas, seul les deux tubes extensibles et compressibles 6a, 6b travaillent.

La fibre optique 2 peut être solidaire de cette cloison 16 par un point d'appui 8 en son milieu, formant un point nodal.

Ce point nodal a pour effet de doubler la résonance propre de la fibre optique 2, ce qui peut être un élément limitant la bande de travail. La résonance propre de la fibre optique 2 doit obligatoirement se trouver en dehors de la bande de travail de l'hydrophone.

Ce point d'appui 8 permet de décaler la bande de fréquence utile vers les hautes fréquences. Il permet aussi de favoriser la tenue mécanique de l'hydrophone lorsqu'il est utilisé dans une flûte.

La fibre optique 2 est alors solidaire le l'enveloppe 4 par trois points d'appui ou points nodaux.

Des rainures peuvent être prévues sur la surface externe de l'enveloppe 4 pour recevoir des fibres optiques externe pouvant être reliées à d'autres capteurs de pression acoustique, par exemple.

L'hydrophone à fibre à réseau de Bragg comprend une enveloppe externe (non illustrée), souple et hermétique, entourant l'enveloppe 4, et les filtres hydrostatiques 10a, 10b. L'enveloppe externe est cylindrique et remplie d'un fluide de façon à transmettre les variations de pression extérieures à la cavité fluide 1.

Ce fluide peut être du ricin par exemple. L'enveloppe externe peut être en polymère, par exemple en Hypalon®.

Ainsi, l'invention fournit un hydrophone qui permet d'atteindre des gains importants, supérieurs à 500, et donc des sensibilités acoustiques supérieures à celles atteintes par les hydrophones connus.

L'invention fournit également un hydrophone ayant un diamètre réduit (inférieur à 10 mm) par rapport à celui des hydrophones connus, et donc un encombrement réduit.

**Revendications**

1. Hydrophone à fibre à réseau de Bragg comprenant une cavité fluide (1), et une fibre optique (2) dans laquelle est intégrée un réseau de Bragg (3), ladite fibre optique (2) traversant ladite cavité fluide (1) selon un axe longitudinal (X) et de manière à ce que ledit réseau de Bragg (3) soit positionné à l'intérieur de celle-ci, ladite cavité fluide (1) est remplie d'un fluide compressible et délimitée par une enveloppe (4) comportant deux extrémités (5a, 5b) solidaires de la fibre optique (2),
   **caractérisé en ce que** :

   - ladite enveloppe (4) comprend deux parties formées par un tube extensible et compressible (6a, 6b) s'étendant selon l'axe longitudinal (X), et une partie intermédiaire (7) rigide séparant lesdites parties formées par un tube extensible et compressible (6a, 6b), chacune des extrémités externes des parties formées par un tube extensible et compressible (6a, 6b) comprenant une extrémité externe coïncidant avec l'une des deux extrémités respectives (5a, 5b) de l'enveloppe (4), et étant apte à être déformée longitudinalement par une différence des pressions exercées sur ses parois, entraînant une variation de la longueur de la fibre optique (2) mesurée par une variation de longueur d'onde d'un flux lumineux extrait de la fibre optique (2).

2. Hydrophone à fibre à réseau de Bragg selon la revendication 1, **caractérisé en ce que** la partie intermédiaire de l'enveloppe (7) comprend une cloison (16) positionnée en son milieu, et traversée par la fibre optique (2).

3. Hydrophone à fibre à réseau de Bragg selon la revendication 2, **caractérisé en ce que** la fibre optique (2) est solidaire de ladite cloison (16).

**4.** Hydrophone à fibre à réseau de Bragg selon l'une quelconque des revendications 1 à 3, **caractérisé en ce que** ladite fibre optique (2) est une fibre optique précontrainte, ladite fibre optique (2) étant maintenue sous tension entre les deux extrémités de l'enveloppe (5a, 5b).

**5.** Hydrophone à fibre à réseau de Bragg selon l'une quelconque des revendications 1 à 4, **caractérisé en ce qu'**il comprend au moins un filtre hydrostatique (10a, 10b) coopérant avec la cavité fluide (1), chaque filtre hydrostatique (10a, 10b) étant muni d'un orifice (13a, 13b) apte à permettre une communication fluidique entre l'intérieur et l'extérieur de la cavité fluide (1).

**6.** Hydrophone à fibre à réseau de Bragg selon la revendication 6, **caractérisé en ce que** chaque filtre hydrostatique (10a, 10b) comprend un réservoir (11a, 11b) délimité par une enveloppe externe déformable (12a, 12b) et par la paroi externe d'un des tubes extensibles et compressibles (6a, 6b), ledit réservoir (11 a, 11 b) étant en communication fluidique avec la cavité fluide (1) par l'intermédiaire dudit orifice (13a, 13b), ladite enveloppe externe déformable (12a, 12b) étant fixée à l'enveloppe (4) de façon hermétique.

**7.** Hydrophone à fibre à réseau de Bragg selon l'une quelconque des revendications 1 à 6, **caractérisé en ce qu'**il comprend une enveloppe externe, souple et hermétique, entourant l'ensemble formé par l'enveloppe (4) et les filtres hydrostatiques (10a, 10b), ladite enveloppe externe étant remplie d'un fluide de façon à transmettre les variations de pression extérieures à ladite cavité fluide (1).

**8.** Hydrophone à fibre à réseau de Bragg selon l'une quelconque des revendications 1 à 7, **caractérisé en ce que** le fluide compressible de la cavité fluide (1) présente un module de compressibilité inférieur à 1,5 GPa.

**Patentansprüche**

**1.** raser-Bragg-Gitter-Hydrophon mit einer Fluidkammer (1) und einer optischen Faser (2), in der ein Bragg-Gitter (3) integriert ist, wobei die optische Faser (2) die Fluidkammer (1) entlang einer Längsachse (X) und derart durchquert, daß das Bragg-Gitter (3) im Inneren derselben angeordnet ist, wobei die Fluidkammer (1) mit einem komprimierbaren Fluid gefüllt und durch eine Hülle (4) begrenzt ist, die zwei mit der optischen Faser (2) verbundene Enden (5a, 5b) aufweist,
**dadurch gekennzeichnet, daß**
die Hülle (4) zwei durch ein ausziehbares und zusammendrückbares, sich entlang der Längsachse (X) erstreckendes Rohr (6a, 6b) gebildete Teile und ein festes, die beiden durch das ausziehbare und zusammendrückbare Rohr (6a, 6b) gebildeten Teile trennendes Zwischenstück (7) aufweist, wobei jedes der äußeren Enden der durch das ausziehbare und zusammendrückbare Rohr (6a, 6b) gebildeten Teile ein äußeres Ende aufweist, das mit einem der jeweiligen beiden Enden (5a, 5b) der Hülle (4) zusammenfällt und das geeignet ist, durch eine Differenz der auf seine Wandungen wirkenden Drücke längs verformt zu werden, was eine Änderung der Länge der optischen Faser (2) bewirkt, die durch eine Änderung der Wellenlänge eines aus der optischen Faser (2) entnommenen Lichtstroms gemessen wird.

**2.** Faser-Bragg-Gitter-Hydrophon gemäß Anspruch 1, **dadurch gekennzeichnet, daß** das Zwischenstück (7) der Hülle eine in deren Mitte angeordnete und von der optischen Faser (2) durchquerte Wandung (16) aufweist.

**3.** Faser-Bragg-Gitter-Hydrophon gemäß Anspruch 2, **dadurch gekennzeichnet, daß** die optische Faser (2) mit der Wandung (16) fest verbunden ist.

**4.** Faser-Bragg-Gitter-Hydrophon gemäß einem der Ansprüche 1 bis 3, **dadurch gekennzeichnet, daß** die optische Faser (2) eine vorgespannte optische Faser ist, wobei die optische Faser (2) zwischen den beiden Enden der Hülle (5a, 5b) unter Spannung gehalten ist.

**5.** Faser-Bragg-Gitter-Hydrophon gemäß einem der Ansprüche 1 bis 4, **dadurch gekennzeichnet, daß** es wenigstens einen mit der Fluidkammer (1) zusammenwirkenden hydrostatischen Filter (10a, 10b) aufweist, wobei jeder hydrostatische Filter (10a, 10b) ein Loch (13a, 13b) aufweist, das geeignet ist, eine Fluidverbindung zwischen dem Inneren und dem Äußeren der Fluidkammer (1) zu ermöglichen.

**6.** Faser-Bragg-Gitter-Hydrophon gemäß Anspruch 5, **dadurch gekennzeichnet, daß** jeder hydrostatische Filter (10a, 10b) einen durch eine verformbare äußere Hülle (12a, 12b) und die äußere Wandung eines der ausziehbaren und zusammendrückbaren Rohre (6a, 6b) begrenzten Tank (11a, 11b) aufweist, wobei der Tank (11a, 11b) durch das Loch (13a, 13b) mit der Fluidkammer (1) in Fluidverbindung steht, wobei die verformbare äußere Hülle (12a, 12b) hermetisch an der Hülle (4) befestigt ist.

7. Faser-Bragg-Gitter-Hydrophon gemäß einem der Ansprüche 1 bis 6, **dadurch gekennzeichnet, daß** es eine äußere weiche und hermetische Hülle aufweist, die die von der Hülle (4) und den hydrostatischen Filtern (10a, 10b) gebildete Einheit umgibt, wobei die äußere Hülle mit einem Fluid gefüllt ist, um die äußeren Druckänderungen an die Fluidkammer (1) zu übertragen.

8. Faser-Bragg-Gitter-Hydrophon gemäß einem der Ansprüche 1 bis 7, **dadurch gekennzeichnet, daß** das komprimierbare Fluid der Fluidkammer (1) ein Kompressionsmodul von weniger als 1,5 GPa aufweist.

**Claims**

1. A fiber Bragg grating hydrophone comprising a fluid cavity (1), and an optical fiber (2) in which a Bragg grating (3) is integrated, wherein said optical fiber (2) extends through said fluid cavity (1) along a longitudinal axis (X) and in such a manner that said Bragg grating (3) is positioned inside the latter, said fluid cavity (1) is filled with a compressible fluid and is delimited by a casing (4) comprising two ends (5a, 5b) integral with the optical fiber (2),
   **characterized in that**:

   - said casing (4) comprises two parts formed by an extensible and compressible tube (6a, 6b) extending along the longitudinal axis (X), and a rigid intermediate part (7) separating said parts formed by an extensible and compressible tube (6a, 6b), wherein each of the outer ends of the parts formed by an extensible and compressible tube (6a, 6b) comprises an outer end coinciding with one of the two ends (5a, 5b) of the casing (4), respectively, and is capable of being longitudinally deformed by a difference in the pressures applied to its walls, causing a length variation of the optical fiber (2) measured by a variation of wavelength of a luminous flux extracted from the optical fiber (2).

2. A fiber Bragg grating hydrophone according to claim 1, **characterized in that** the intermediate part (7) of the casing comprises a wall (16) positioned at the middle thereof, and passed through by the optical fiber (2).

3. A fiber Bragg grating hydrophone according to claim 2, **characterized in that** the optical fiber (2) is integral with said wall (16).

4. A fiber Bragg grating hydrophone according to any one of claims 1 to 3, **characterized in that** said optical fiber (2) is a pre-stressed optical fiber, wherein said optical fiber (2) is kept tensioned between the two casing ends (5a, 5b).

5. A fiber Bragg grating hydrophone according to any one of claims 1 to 4, **characterized in that** it comprises at least one hydrostatic filter (10a, 10b) cooperating with the fluid cavity (1), wherein each hydrostatic filter (10a, 10b) is provided with an orifice (13a, 13b) capable of providing a fluid communication between the inside and the outside of the fluid cavity (1).

6. A fiber Bragg grating hydrophone according to claim 5, **characterized in that** each hydrostatic filter (10a, 10b) comprises a tank (11a, 11b) delimited by a deformable outer casing (12a, 12b) and by the outer wall of one of the extensible and compressible tubes (6a, 6b), wherein said tank (11 a, 11 b) is in fluid communication with the fluid cavity (1) through said orifice (13a, 13b) and wherein said deformable outer casing (12a, 12b) is tightly fastened to the casing (4).

7. A fiber Bragg grating hydrophone according to any one of claims 1 to 6, **characterized in that** it comprises a flexible and tight outer casing, surrounding the unit formed by the casing (4) and the hydrostatic filters (10a, 10b), wherein said outer casing is filled with a fluid so as to transmit the pressure variations external to said fluid cavity (1).

8. A fiber Bragg grating hydrophone according to any one of claims 1 to 7, **characterized in that** the compressible fluid of the fluid cavity (1) has a compressibility modulus lower than 1.5 Gpa.

FIGURE 1

FIGURE 2

FIGURE 3

A-A

FIGURE 4

FIGURE 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6160762 A
- WO 2006034538 A